(19)

Europäisches
Patentamt
European
Patent Office
Office européen
des brevets

(11)  **EP 3 533 891 A1**

(12)  **EUROPEAN PATENT APPLICATION**
published in accordance with Art. 153(4) EPC

(43) Date of publication:
**04.09.2019 Bulletin 2019/36**

(21) Application number: **17864134.6**

(22) Date of filing: **22.08.2017**

(51) Int Cl.:
*C22C 38/00* (2006.01)      *C22C 38/16* (2006.01)
*C22C 38/58* (2006.01)      *C21D 8/02* (2006.01)
*C22C 38/02* (2006.01)      *C22C 38/04* (2006.01)
*C22C 38/08* (2006.01)      *C22C 38/12* (2006.01)
*C22C 38/14* (2006.01)

(86) International application number:
**PCT/JP2017/029900**

(87) International publication number:
**WO 2018/079026 (03.05.2018 Gazette 2018/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.10.2016  JP 2016210122**

(71) Applicant: **JFE Steel Corporation
Tokyo 100-0011 (JP)**

(72) Inventors:
• **NAKASHIMA Koichi
Tokyo 100-0011 (JP)**
• **MURAKAMI Yoshiaki
Tokyo 100-0011 (JP)**
• **HASE Kazukuni
Tokyo 100-0011 (JP)**

(74) Representative: **Grünecker Patent- und
Rechtsanwälte
PartG mbB
Leopoldstraße 4
80802 München (DE)**

(54)  **STEEL FOR HIGH HEAT INPUT WELDING**

(57)      An object is to provide a steel material for high heat input welding that is used for low-temperature storage tanks, for example, and that has excellent joint strength and low-temperature toughness at -55°C of a weld heat-affected zone when high heat input welding at a heat input exceeding 80 kJ/cm is performed.

The steel material for high heat input welding, contains, in mass%, C: 0.04 to 0.09%, Si: 0.15 to 0.25%, Mn: 1.40 to 2.00%, P: 0.015% or less, S: 0.0005 to 0.0040%, Cu: 0.05 to 0.7%, Ni: 0.4 to 1.3%, Al: 0.030 to 0.080%, Ti: 0.005 to 0.023%, B: 0.0003 to 0.0020%, Ca: 0.0005 to 0.0030%, N: 0.0030 to 0.0060%, O: 0.0040% or less, and further, Nb: 0.005% or less and Mo: 0.01% or less, with the balance being Fe and incidental impurities, wherein Mn, Cu, and Ni are contained so as to satisfy the following expression (1):

$$1.85 \leq Mn + 0.4 \times (Cu + Ni) \leq 2.10, \quad (1)$$

where Mn, Cu, and Ni represent the contents (mass%) of respective components or are set to zero if not contained.

EP 3 533 891 A1

## Description

Technical Field

The present invention relates to a steel material for high heat input welding that is suitable as a steel material used for various welded structures in low-temperature storage tanks, shipbuilding, construction, and so forth and that has excellent joint strength and low-temperature toughness of a weld heat-affected zone when high heat input welding at a heat input exceeding 80 kJ/cm is performed.

Background Art

Steel materials used in the fields of low-temperature storage tanks, shipbuilding, construction, and so forth are typically finished into structures of desired shapes by joining through welding. In view of safety, excellent toughness of welds, not to mention base metal toughness of steel materials used, is required for such structures. For example, storage tanks for liquefied ammonium or liquefied propane gas (LPG) are used at a low temperature of about - 55°C, which is equal to or lower than the liquefaction temperatures of the gases thereof, and are thus required to have excellent toughness at such a low temperature. Welding is typically performed by multipass welding at low heat input. From a viewpoint of enhancing construction efficiency, however, there is a strong demand for application of single-pass welding at high heat input, such as electrogas welding. It is known, however, that the microstructure of a weld heat-affected zone (HAZ) typically coarsens as weld heat input increases, thereby the toughness of the weld heat-affected zone being impaired.

As a technique for improving low-temperature toughness of steel used for low-temperature storage tanks, Patent Literature 1, for example, discloses low-yield-ratio high-tensile-strength steel having excellent weldability and low-temperature toughness, where the steel has a specific composition containing Nb, and conditions in which martensite-austenite (MA) constituents exist, such as the fraction and size, are specified.

In addition, Patent Literature 2 discloses a steel sheet having excellent low-temperature toughness of a welded joint, where the steel sheet has a microstructure composed of ferrite and a structure other than ferrite, and an average carbon concentration in the structure other than ferrite is four times or less the carbon concentration in the entire steel sheet.

These conventional techniques, however, were not designed for high heat input welding, such as welding at a weld heat input exceeding 80 kJ/cm, and low-temperature toughness of a heat-affected zone by high heat input welding was thus unsatisfactory.

As a method of improving toughness of a heat-affected zone by high heat input welding, for example, a technique employing an action to suppress coarsening of austenite grains and an action of providing ferrite transformation nuclei by finely dispersing TiN has already been put to practical use. In addition, a technique of dispersing Ti oxides is disclosed in Patent Literature 3.

In the conventional technique that actively uses TiN, however, there is a problem in which Ti loses the above-mentioned action ability in a weld heat-affected zone that is heated to a temperature range where TiN dissolves, and still worse a base metal microstructure is embrittled due to dissolved Ti and dissolved N, thereby toughness being considerably impaired. In the technique that uses Ti oxides as in Patent Literature 3, there is a problem in which dispersing oxides uniformly and finely is difficult.

Meanwhile, to enhance toughness of a weld heat-affected zone by high heat input welding, Patent Literature 4, for example, discloses use of CaS by appropriately including Ca, which is required for controlling the morphology of sulfides. By using CaS that precipitates at a lower temperature than Ca oxides, it becomes possible to finely disperse CaS. Patent Literature 4 discloses a technique for achieving high toughness by finely dispersing ferrite transformation nuclei, such as MnS, TiN, and BN, that have been precipitated with CaS as nuclei during cooling, thereby converting the microstructure in a weld heat-affected zone into a fine microstructure of ferrite and pearlite.

Citation List

Patent Literature

PTL 1: Japanese Patent No. 4361765
PTL 2: Japanese Patent No. 4637516
PTL 3: Japanese Unexamined Patent Application Publication No. 57-51243
PTL 4: Japanese Patent No. 3546308

Summary of Invention

Technical Problem

In a case of a steel composition containing a relatively large amount of added alloying elements, however, even in the technique of Patent Literature 4, sufficient toughness is not achieved at a low temperature, such as - 55°C, in some cases due to coarse bainite being formed in the microstructure of a weld bond and/or a hard brittle microstructure called a martensite-austenite (MA) constituent being formed when high heat input welding at a weld heat input exceeding 80 kJ/cm is performed. In addition, there is a problem in which a region that softens in response to weld heat input is formed within a heat-affected zone somewhat apart from the weld bond, and consequently, sufficient joint strength is not achieved.

The present invention has been made in view of the above, and an object of the present invention is to provide a steel material for high heat input welding that is used for low-temperature storage tanks, for example, and that has excellent joint strength and low-temperature toughness at - 55°C in a weld heat-affected zone when high heat input welding at a heat input exceeding 80 kJ/cm is performed. Solution to Problem

To achieve the above object, the present inventors conducted an intensive study and found the following.

1. To achieve excellent toughness in a weld heat-affected zone at a low temperature, such as -55°C, when high heat input welding is performed, it is important: to form intragranular ferrite by suppressing coarsening of austenite grains in a high temperature range and by suppressing formation of coarse bainite in the subsequent cooling process; to decrease the amount of the martensite-austenite (MA) constituent; and further, to enhance joint strength by suppressing softening in the heat-affected zone without impairing low-temperature toughness.

2. As a guide for designing a specific composition, it is effective: to ensure desired amounts of Ti and N for suppressing coarsening of austenite grains; to not include Nb and Mo or to limit their contents to those of incidental impurities for suppressing formation of coarse bainite and decreasing formation of MA; and to control the amounts of Al, N, B, Ca, S, O, Mn, Cu, and Ni appropriately for forming intragranular ferrite and ensuring joint strength.

The present invention has been made on the basis of the above findings with additional studies. The present invention will be summarized as follows.

[1] A steel material for high heat input welding, containing, in mass%, C: 0.04 to 0.09%, Si: 0.15 to 0.25%, Mn: 1.40 to 2.00%, P: 0.015% or less, S: 0.0005 to 0.0040%, Cu: 0.05 to 0.7%, Ni: 0.4 to 1.3%, Al: 0.030 to 0.080%, Ti: 0.005 to 0.023%, B: 0.0003 to 0.0020%, Ca: 0.0005 to 0.0030%, N: 0.0030 to 0.0060%, O: 0.0040% or less, and further, Nb: 0.005% or less and Mo: 0.01% or less, with the balance being Fe and incidental impurities, wherein Mn, Cu, and Ni are contained so as to satisfy the following expression (1):

$$1.85 \leq Mn + 0.4 \times (Cu + Ni) \leq 2.10, \quad (1)$$

where Mn, Cu, and Ni represent the contents (mass%) of respective components or are set to zero if not contained.

[2] The steel material for high heat input welding according to [1], wherein the following expression (2) is further satisfied:

$$0 < [[Ca - (0.18 + 130 \times Ca) \times O]/1.25]/S \leq 0.8, \quad (2)$$

where Ca, O, and S represent the contents (mass%) of respective components.

[3] The steel material for high heat input welding according to [1] or [2], further containing, in mass%, one or more selected from Cr: 0.5% or less, V: 0.1% or less, and W: 0.1% or less.

[4] The steel material for high heat input welding according to any one of [1] to [3], further containing, in mass%, one or more selected from Mg: 0.0005 to 0.0050%, Zr: 0.001 to 0.020%, and REM: 0.001 to 0.020%.

[5] The steel material for high heat input welding according to any one of [1] to [4], wherein an average grain size inside prior austenite grains in a microstructure of a heat-affected zone neighboring a weld bond is 10 μm or less when high heat input welding at a weld heat input of 80 to 300 kJ/cm is performed.

Advantageous Effects of Invention

According to the present invention, it is possible to obtain at a low cost a steel material having excellent strength in a weld heat-affected zone, low-temperature toughness, and joint strength even when high heat input welding at 80 to 300 kJ/cm is performed. Accordingly, a steel material of the present invention is suitably used for low-temperature storage tanks, ships, and large steel structures that are constructed by high heat input welding, such as electrogas welding, submerged arc welding, or electroslag welding.

Description of Embodiments

Hereinafter, embodiments of the present invention will be described. First, the significance in limiting the chemical composition in the present invention will be described. In the present invention, all % designations concerning the chemical composition indicate mass%.

C: 0.04 to 0.09%

It is essential to contain 0.04% or more of C to achieve required strength. A content exceeding 0.09%, however, impairs the toughness of a weld heat-affected zone. Accordingly, the upper limit is set to 0.09%. More preferably, the lower limit is 0.045% and the upper limit is preferably less than 0.08%.

Si: 0.15 to 0.25%

Si is an element that is inevitably contained in steel and is set to be contained at 0.15% or more for achieving high strength of steel. Meanwhile, a content exceeding 0.25% results in formation of a large amount of martensite-austenite constituents in a heat-affected zone as a result of high heat input welding, thereby impairing toughness. Accordingly, the upper limit is set to 0.25%. The amount of Si in steel is preferably 0.22% or less and more preferably 0.20% or less.

Mn: 1.40 to 2.00%

Mn is required to be contained at 1.40% or more to ensure the strength of a base metal, whereas a content exceeding 2.00% results in impaired toughness of a weld. Accordingly, the range of Mn is set to 1.40 to 2.00%. In view of the toughness of a weld, the upper limit is preferably 1.60%.

P: 0.015% or less

P is an incidentally contained impurity. A content exceeding 0.015% results in impaired toughness of a base metal and a weld. Accordingly, the upper limit is set to 0.015%. To achieve excellent toughness, 0.010% or less is preferable and 0.007% or less is more preferable.

S: 0.0005 to 0.0040%

S is required to be contained at 0.0005% or more to form necessary CaS or MnS, whereas a content exceeding 0.0040% results in impaired toughness of a base metal. Accordingly, S content is set to the range of 0.0005 to 0.0040%. The lower limit is preferably 0.0010% and the upper limit is preferably 0.0035%.

Cu: 0.05 to 0.7%

Cu can enhance strength while suppressing deterioration in toughness of a base metal and a weld heat-affected zone. Such effects are exerted by a content of 0.05% or more. A content exceeding 0.7%, however, causes hot shortness and impairs surface appearance quality of a steel plate in some cases. Accordingly, Cu content is set to 0.05 to 0.7%. The lower limit is preferably 0.1% or more and the upper limit is preferably 0.5%.

Ni: 0.4 to 1.3%

In a similar manner to Cu, Ni can also enhance strength while suppressing deterioration in toughness of a base metal and a weld heat-affected zone. Such effects are exerted by a content of 0.4% or more. Meanwhile, the effects level off in some cases at a content exceeding 1.3%. Accordingly, the upper limit of Ni content is set to 1.3%.

Al: 0.030 to 0.080%

Al is an important element in the present invention. A content of at least 0.010% or more is required for deoxidization of steel. In addition, Al forms AlN in a weld heat-affected zone and thus decreases dissolved N, thereby contributing to enhanced toughness. Further, AlN formed in the weld heat-affected zone provides ferrite nucleation sites inside prior austenite grains and contributes to refinement of the grain size, thereby enhancing toughness. To obtain such effects, Al is required to be contained at 0.030% or more. Meanwhile, a content exceeding 0.080% results in impaired toughness of a base metal, and also impaired toughness of a weld heat-affected zone. Accordingly, Al content is set to the range of 0.030 to 0.080%. The lower limit is preferably 0.035% and the upper limit is preferably 0.070%. The lower limit is more preferably 0.040% and the upper limit is more preferably 0.065%.

Ti: 0.005 to 0.023%

Ti precipitates as TiN during solidification and contributes to achieving high toughness by suppressing coarsening of austenite in a weld heat-affected zone and/or by acting as ferrite transformation nuclei. A content of less than 0.005% is insufficient for such effects, whereas a content exceeding 0.023% fails to obtain the expected effects due to coarsening of TiN particles. Accordingly, Ti content is set to the range of 0.005 to 0.023%. The lower limit is preferably 0.008% and the upper limit is preferably 0.020%.

B: 0.0003 to 0.0020%

B is an element that forms BN in a weld heat-affected zone to decrease solid-solute N and act as ferrite transformation nuclei. To exert such effects, a content of 0.0003% or more is required. Meanwhile, a content exceeding 0.0020% results in impaired toughness due to excessively enhanced hardenability. Accordingly, B content is set to the range of 0.0003 to 0.0020%.

Ca: 0.0005 to 0.0030%

Ca is an element that effectively improves toughness by chemically fixing S through formation of CaS. To exert such effects, a content of at least 0.0005% or more is required. Meanwhile, such effects level off at a content exceeding 0.0030%. Accordingly, Ca content is limited to the range of 0.0005% to 0.0030%. The lower limit is preferably 0.0010% and the upper limit is preferably 0.0025%.

N: 0.0030 to 0.0060%

N is required to ensure an amount commensurate with Ti for TiN formation. A content of less than 0.0030% cannot form a sufficient amount of TiN, and consequently, cannot achieve effects, such as suppressed coarsening of austenite in a weld heat-affected zone and contribution to achieving high toughness as ferrite transformation nuclei. Meanwhile, a content exceeding 0.0060% results in an increased amount of solid-solute N in a region where TiN is dissolved by weld heat input, thereby significantly impairing toughness. Accordingly, N content is set to the range of 0.0030 to 0.0060%. The lower limit is preferably 0.0035% and the upper limit is preferably 0.0055%.

O: 0.0040% or less

O is inevitably contained. However, since O precipitates as oxides during solidification, a content exceeding 0.0040% results in impaired toughness of a base metal and a weld heat-affected zone. Accordingly, O content is set to 0.0040% or less and preferably 0.0035% or less.

Nb: 0.005% or less, Mo: 0.01% or less

Nb and Mo are important elements in the present invention since their contents are required to be strictly limited. By including Nb and Mo, the microstructure inside prior austenite grains in a weld heat-affected zone becomes coarse bainite, thereby toughness being significantly impaired. Accordingly, Nb and Mo are not contained except for being contained as incidental impurities. In the present invention, the contents of Nb and Mo as incidental impurities are set to 0.005% or less and 0.01% or less, respectively. When the contents are 0.005% or less for Nb and 0.01% or less for Mo, deterioration in toughness of a weld heat-affected zone is scarcely affected.

In the present invention, one or more selected from Cr, V, and W may be optionally contained, in mass%, within the following respective ranges.

Cr: 0.5% or less

Cr is an element effective for achieving high strength of a base metal and a welded joint, and such an effect is exerted at a content of 0.05% or more. Excessive addition, however, adversely affects toughness in some cases. Accordingly, when Cr is added, the upper limit is preferably set to 0.5%.

V: 0.1% or less

V enhances the strength and toughness of a base metal, and VN acts as ferrite nuclei. Such effects are exerted by a content of 0.02% or more. A content exceeding 0.1%, however, causes impaired toughness in some cases. Accordingly, when V is added, setting to 0.1% or less is preferable.

W: 0.1% or less

W is an element effective for achieving high strength of a base metal, and such an effect is exerted at a content of 0.02% or more. Excessive addition, however, adversely affects toughness in some cases. Accordingly, when W is added, setting to 0.1% is preferable.
In the present invention, one or more selected from Mg, Zr, and REM may be further contained, in mass%, within the following ranges.

Mg: 0.0005 to 0.0050%

Mg is an element that effectively improves toughness through dispersion of oxides. To exert such an effect, a content of at least 0.0005% or more is preferable. Meanwhile, the effect levels off at a content exceeding 0.0050% in some cases. Accordingly, when Mg is added, setting to 0.0005 to 0.0050% is preferable.

Zr: 0.001 to 0.020%

Zr is an element that effectively improves toughness through dispersion of oxides. To exert such an effect, a content of at least 0.001% or more is preferable. Meanwhile, the effect levels off at a content exceeding 0.020% in some cases. Accordingly, when Zr is added, setting to 0.001 to 0.020% is preferable.

REM: 0.001 to 0.020%

REM is an element that effectively improves toughness through dispersion of oxides. To exert such an effect, a content of at least 0.001% or more is preferable. Meanwhile, the effect levels off at a content exceeding 0.020% in some cases. Accordingly, when REM is added, setting to 0.001 to 0.020% is preferable.
The balance other than the components described above is Fe and incidental impurities.
Further, in the present invention, the following expression (1) is required to be satisfied.

$$1.85 \leq Mn + 0.4 \times (Cu + Ni) \leq 2.10, \quad (1)$$

where Mn, Cu, and Ni each represent the content (mass%) of each respective component or are set to zero if not contained.
In the present invention, by setting $Mn + 0.4 \times (Cu + Ni)$ to 1.85 or more and 2.10 or less, desired base metal strength and welded joint strength (especially, welded joint strength of JIS No. 1A specimen in which gauge length is long and high joint strength is thus difficult to be achieved), as well as the toughness of a weld heat-affected zone, can be achieved simultaneously. When the value is less than 1.85, desired strength is not achieved, whereas when the value exceeds 2.10, the toughness of a weld heat-affected zone deteriorates.
In the present invention, the following expression (2) is preferably satisfied.

$$0 < [[Ca - (0.18 + 130 \times Ca) \times O]/1.25]/S \leq 0.8, \quad (2)$$

where Ca, O, and S each represent the content (mass%) of each respective component.
In the present invention, by including Ca, O, and S so as to satisfy the expression of $0 < [[Ca - (0.18 + 130 \times Ca) \times O]/1.25]/S \leq 0.8$, complex sulfides are formed as MnS precipitated on CaS. When the value of [[Ca - (0.18 + 130 × Ca) × O]/1.25]/S exceeds 0.8, most S is fixed by Ca. As a result, MnS that acts as ferrite nuclei does not precipitate on CaS, and the toughness of a weld heat-affected zone cannot be ensured. Meanwhile, when the value of [[Ca - (0.18 + 130 × Ca) × O]/1.25]/S exceeds 0, composite sulfides are formed as MnS precipitated on CaS, and an effect of promoting ferrite transformation is exerted. Accordingly, [[Ca - (0.18 + 130 × Ca) × O]/1.25]/S is set to more than 0 and 0.8 or less. When [[Ca - (0.18 + 130 × Ca) × O]/1.25]/S is 0 or less, S precipitates as MnS alone without precipitation of CaS, and consequently, fine dispersion in a weld heat-affected zone is not achieved.

In the present invention, the microstructure of a heat-affected zone preferably satisfies the following.

Average Size of Grains Inside Prior Austenite Grains in Microstructure of Heat-Affected Zone Neighboring Weld Bond being 10 μm or Less When High Heat Input Welding at Weld Heat Input of 80 to 300 kJ/cm is Performed

In the present invention, by setting an average grain size inside prior austenite grains in the microstructure of a heat-affected zone neighboring a weld bond to 10 μm or less when high heat input welding at a weld heat input of 80 to 300 kJ/cm is performed, resistance to fracture propagation is enhanced, thereby achieving excellent toughness of the heat-affected zone. High heat input welding at a weld heat input of 80 to 300 kJ/cm is taken into account here since a microstructure tends to coarsen and toughness readily deteriorates by such high heat input welding. The microstructure of a heat-affected zone neighboring a weld bond herein refers to that of a region from the boundary between a weld metal and a base metal to an about 0.5 mm-position inside the base metal. An average grain size inside prior austenite grains of 10 μm or less can be achieved by not including Nb and Mo or including Nb and Mo as incidental impurities, as well as by controlling the contents of Ti, N, Al, B, Ca, S, and O within specified ranges, and consequently, excellent toughness can be achieved in the heat-affected zone.

An average grain size inside prior austenite grains can be determined by employing EBSD (electron back-scattering diffraction). In the present invention, an average equivalent circular diameter of regions surrounded by boundaries with a crystal misorientation of 15° or more on a crystal orientation map obtained by EBSD measurement is defined as an average grain size.

A steel material of the present invention is manufactured as follows, for example. Molten pig iron is first refined in a converter into steel, degassed in a RH degasser, and formed into a slab by continuous casting or ingot casting and slabbing. A steel material can be manufactured through steps, such as reheating of the obtained slab; hot rolling followed by natural cooling or accelerated cooling; direct quenching and tempering; reheating followed by quenching and tempering; and reheating followed by normalizing and tempering. Manufacturing conditions are not particularly specified provided that desired strength is achieved. Preferable rolling conditions are a reheating temperature of 1,050°C to 1,250°C, a finish rolling temperature of 700°C to 900°C, an average cooling rate after rolling of 1°C/s to 50°C/s, and a cooling end temperature of 400°C to 600°C.

EXAMPLES

Next, the present invention will be described on the basis of the Examples.

Steels each having the composition shown in Table 1 were prepared by using a 150 kg high-frequency induction furnace and formed into a 200 mm-thick slab. The slab was heated at 1,150°C for 1 hour, then hot-rolled into a 40 mm-thick plate at a finish rolling temperature (as temperature at center in plate thickness) of 770°C, and subsequently subjected to accelerated cooling to 500°C to 550°C at an average cooling rate of 10°C/s (at center in plate thickness), followed by natural cooling.

[Table 1]

| Steel No. | Composition (mass%) | | | | | | | | | | | | | | | | | Expression (1) | Expression (2) | Note |
|---|---|---|---|---|---|---|---|---|---|---|---|---|---|---|---|---|---|---|---|---|
| | C | Si | Mn | P | S | Al | Ti | B | Ca | N | O | Nb* | Mo** | Cu | Ni | Cr | others | | | |
| 1 | 0.069 | 0.16 | 1.57 | 0.004 | 0.0017 | 0.048 | 0.012 | 0.0008 | 0.0021 | 0.0045 | 0.0019 | <0.005 | <0.01 | 0.12 | 0.57 | | | 1.85 | 0.58 | Applicable Example |
| 2 | 0.055 | 0.15 | 1.88 | 0.005 | 0.0021 | 0.055 | 0.014 | 0.0006 | 0.0019 | 0.0051 | 0.0015 | <0.005 | <0.01 | 0.07 | 0.41 | | | 2.07 | 0.48 | Applicable Example |
| 3 | 0.042 | 0.18 | 1.60 | 0.003 | 0.0022 | 0.061 | 0.013 | 0.0007 | 0.0026 | 0.0048 | 0.0022 | <0.005 | <0.01 | 0.18 | 0.73 | | | 1.96 | 0.53 | Applicable Example |
| 4 | 0.081 | 0.21 | 1.45 | 0.004 | 0.0015 | 0.038 | 0.010 | 0.0005 | 0.0017 | 0.0036 | 0.0031 | <0.005 | <0.01 | 0.37 | 0.66 | 0.11 | | 1.86 | 0.24 | Applicable Example |
| 5 | 0.073 | 0.17 | 1.55 | 0.005 | 0.0024 | 0.052 | 0.013 | 0.0006 | 0.0020 | 0.0042 | 0.0022 | <0.005 | <0.01 | 0.15 | 0.64 | | V:0.02 | 1.87 | 0.34 | Applicable Example |
| 6 | 0.052 | 0.15 | 1.58 | 0.002 | 0.0018 | 0.046 | 0.011 | 0.0008 | 0.0017 | 0.0056 | 0.0029 | <0.005 | <0.01 | 0.20 | 0.60 | | W:0.03 | 1.90 | 0.24 | Applicable Example |
| 7 | 0.062 | 0.16 | 1.59 | 0.004 | 0.0019 | 0.053 | 0.010 | 0.0007 | 0.0020 | 0.0044 | 0.0023 | <0.005 | <0.01 | 0.32 | 0.55 | | Mg:0.001 | 1.94 | 0.42 | Applicable Example |
| 8 | 0.056 | 0.22 | 1.55 | 0.002 | 0.0023 | 0.038 | 0.015 | 0.0007 | 0.0019 | 0.0049 | 0.0018 | <0.005 | <0.01 | 0.12 | 0.71 | | REM:0.0012 | 1.88 | 0.39 | Applicable Example |
| 9 | 0.043 | 0.18 | 1.50 | 0.003 | 0.0020 | 0.049 | 0.014 | 0.0014 | 0.0015 | 0.0053 | 0.0018 | <0.005 | <0.01 | 0.35 | 0.81 | | Zr:0.0015 | 1.96 | 0.33 | Applicable Example |
| 10 | 0.071 | 0.16 | 1.57 | 0.005 | 0.0019 | <u>0.021</u> | 0.014 | 0.0006 | 0.0017 | 0.0041 | 0.0021 | <0.005 | <0.01 | 0.05 | 0.71 | | | 1.87 | 0.36 | Comparative Example |
| 11 | 0.055 | 0.21 | 1.53 | 0.004 | 0.0020 | 0.051 | 0.011 | 0.0005 | 0.0021 | <u>0.0023</u> | 0.0014 | <0.005 | <0.01 | 0.15 | 0.65 | | | 1.85 | 0.59 | Comparative Example |
| 12 | 0.062 | <u>0.32</u> | 1.51 | 0.006 | 0.0025 | 0.045 | 0.010 | 0.0007 | 0.0018 | 0.0052 | 0.0021 | <0.005 | <0.01 | 0.11 | 0.83 | 0.12 | | 1.89 | 0.30 | Comparative Example |
| 13 | 0.068 | 0.21 | 1.55 | 0.003 | 0.0021 | 0.042 | 0.012 | <u>0.0001</u> | 0.0021 | 0.0033 | 0.0019 | <0.005 | <0.01 | 0.08 | 0.75 | | Mg:0.001 | 1.88 | 0.47 | Comparative Example |
| 14 | 0.051 | 0.19 | 1.53 | 0.004 | 0.0009 | 0.049 | 0.015 | 0.0007 | <u>0.0001</u> | 0.0041 | 0.0020 | <0.005 | <0.01 | 0.19 | 0.61 | | | 1.85 | -0.25 | Comparative Example |
| 15 | 0.049 | 0.24 | <u>1.32</u> | 0.003 | 0.0011 | 0.039 | 0.012 | 0.0007 | 0.0019 | 0.0042 | 0.0022 | <0.005 | <0.01 | 0.20 | 0.65 | | | <u>1.66</u> | 0.70 | Comparative Example |
| 16 | 0.060 | 0.19 | 1.55 | 0.002 | 0.0015 | 0.051 | 0.011 | 0.0006 | 0.0018 | 0.0045 | 0.0032 | <u>0.012</u> | <0.01 | 0.22 | 0.55 | | | 1.86 | 0.25 | Comparative Example |
| 17 | 0.053 | 0.20 | 1.53 | 0.005 | 0.0021 | 0.045 | 0.013 | 0.0009 | 0.0022 | 0.0051 | 0.0028 | <0.005 | <u>0.05</u> | 0.29 | 0.61 | | | 1.89 | 0.34 | Comparative Example |
| 18 | 0.051 | 0.18 | 1.51 | 0.006 | <u>0.0045</u> | 0.052 | 0.011 | 0.0007 | 0.0019 | 0.0048 | 0.0029 | <0.005 | <0.01 | 0.15 | 0.75 | | | 1.87 | 0.12 | Comparative Example |
| 19 | 0.048 | 0.20 | 1.65 | 0.004 | 0.0020 | <u>0.084</u> | 0.010 | 0.0008 | 0.0021 | 0.0048 | 0.0022 | <0.005 | <0.01 | 0.21 | 0.67 | | | 2.00 | 0.44 | Comparative Example |
| 20 | 0.055 | 0.19 | 1.54 | 0.004 | 0.0019 | 0.049 | <u>0.025</u> | 0.0011 | 0.0023 | 0.0050 | 0.0029 | <0.005 | <0.01 | 0.19 | 0.71 | 0.05 | | 1.90 | 0.38 | Comparative Example |
| 22 | 0.055 | 0.17 | 1.56 | 0.005 | 0.0021 | 0.052 | 0.013 | 0.0011 | 0.0022 | 0.0049 | 0.0020 | <0.005 | <0.01 | 0.05 | 0.40 | | | <u>1.74</u> | 0.48 | Comparative Example |
| 23 | 0.076 | 0.16 | 1.52 | 0.007 | 0.0020 | 0.061 | 0.013 | 0.0009 | 0.0023 | 0.0039 | 0.0019 | <0.005 | <0.01 | | | | | <u>1.52</u> | 0.56 | Comparative Example |

Underline; Comparative Example  Expression (1): $Mn + 0.4 \times (Cu + Ni)$

Expression (2): $\{(Ca - (0.18 + 130 \times Ca) \times O)/1.25\}/S$

*) "<0.005" represents Nb content as incidental impurity

**) "<0.01" represents Mo content as incidental impurity

EP 3 533 891 A1

Tensile specimens of round bars (parallel portion of 14 mm$\phi$ × 85 mm, gauge length of 70 mm) at the 1/4t (t: thickness) position along the C direction (direction perpendicular to rolling direction), and Charpy specimens (V-notch, 2 mm deep) at the 1/4t position along the L direction (rolling direction) were taken from the obtained steel plates. These specimens were evaluated for the base metal strength (yield strength YS and tensile strength TS) and Charpy absorbed energy at a test temperature of -55°C (as an average of 3 specimens, referred to as "vE-55°C"). The target characteristics were set to YS $\geq$ 345 MPa, TS $\geq$ 485 MPa, and Charpy absorbed energy vE-55°C $\geq$ 80 J.

Further, to evaluate characteristics in a heat-affected zone of a welded joint, a joint was fabricated by electrogas welding (EGW), which is high heat input welding (about 200 kJ/cm), and subsequently, the joint strength was evaluated by using a full-thickness JIS No. 1 specimen and a full-thickness JIS No. 1A specimen taken orthogonally to a weld bead. Moreover, the toughness of a weld heat-affected zone (the HAZ toughness) was evaluated as Charpy absorbed energy at a test temperature of -55°C (as an average of 6 specimens, referred to as "vE-55°C") by using Charpy specimens notched at the weld bond at 1 mm-positions from the front and rear surfaces in the thickness direction. Target characteristics were set to joint TS $\geq$ 485 MPa and Charpy absorbed energy vE-55°C as the HAZ toughness of a welded joint $\geq$ 80 J. An average grain size inside prior austenite grains in a weld heat-affected zone was determined by measuring crystal orientation of an area of 400 $\mu$m × 400 $\mu$m by EBSD, by drawing boundaries with a crystal misorientation of 15° or more on a crystal orientation map, on which only the inside of prior austenite grains was extracted, and by regarding an average equivalent circular diameter of regions surrounded by the boundaries as the average grain size.

Table 2 shows the average grain size inside prior austenite grains and HAZ toughness, as well as mechanical characteristics of a base metal.

[Table 2]

| Steel No. | Base metal | | | Welded joint | | | | Note |
|---|---|---|---|---|---|---|---|---|
| | YS (N/mm$^2$) | TS (N/mm$^2$) | vE-55°C (J) | Joint TS (N/mm$^2$) | | vE-55°C (J) | Average grain size ($\mu$m) | |
| | | | | JIS No. 1 | JIS No. 1A | | | |
| 1 | 376 | 525 | 377 | 531 | 519 | 152 | 7 | Applicable Example |
| 2 | 388 | 541 | 324 | 539 | 526 | 129 | 8 | Applicable Example |
| 3 | 381 | 533 | 354 | 536 | 522 | 136 | 6 | Applicable Example |
| 4 | 393 | 550 | 315 | 544 | 533 | 120 | 8 | Applicable Example |
| 5 | 384 | 531 | 363 | 527 | 520 | 145 | 6 | Applicable Example |
| 6 | 369 | 523 | 374 | 527 | 513 | 168 | 5 | Applicable Example |
| 7 | 374 | 520 | 360 | 525 | 518 | 151 | 7 | Applicable Example |
| 8 | 365 | 525 | 370 | 527 | 519 | 155 | 6 | Applicable Example |
| 9 | 367 | 530 | 374 | 537 | 522 | 162 | 5 | Applicable Example |
| 10 | 369 | 517 | 355 | 526 | 518 | 20 | 15 | Comparative Example |
| 11 | 362 | 509 | 381 | 527 | 511 | 19 | 16 | Comparative Example |
| 12 | 385 | 537 | 336 | 538 | 524 | 43 | 9 | Comparative Example |

(continued)

| Steel No. | Base metal | | | Welded joint | | | | | Note |
|---|---|---|---|---|---|---|---|---|---|
| | YS (N/mm$^2$) | TS (N/mm$^2$) | vE-55°C (J) | Joint TS (N/mm$^2$) | | vE-55°C (J) | Average grain size (μm) | | |
| | | | | JIS No. 1 | JIS No. 1A | | | | |
| 13 | 368 | 521 | 370 | 527 | 519 | 55 | 13 | | Comparative Example |
| 14 | 375 | 528 | 349 | 529 | 520 | 32 | 18 | | Comparative Example |
| 15 | 325 | 449 | 392 | 502 | 462 | 163 | 9 | | Comparative Example |
| 16 | 377 | 530 | 355 | 531 | 519 | 41 | 10 | | Comparative Example |
| 17 | 375 | 527 | 349 | 532 | 518 | 29 | 10 | | Comparative Example |
| 18 | 369 | 523 | 361 | 529 | 512 | 33 | 14 | | Comparative Example |
| 19 | 371 | 519 | 255 | 527 | 515 | 35 | 9 | | Comparative Example |
| 20 | 367 | 517 | 351 | 536 | 521 | 19 | 16 | | Comparative Example |
| 22 | 351 | 493 | 382 | 511 | 476 | 167 | 7 | | Comparative Example |
| 23 | 348 | 490 | 379 | 489 | 458 | 171 | 8 | | Comparative Example |

Table 2 reveals that all Nos. 1 to 9 as the Applicable Examples had high strength represented by a tensile strength of each welded joint of 485 MPa or more, as well as excellent toughness of each weld heat-affected zone represented by Charpy absorbed energy of the weld heat-affected zone vE-55°C of 80 J or more. In particular, all the Applicable Examples achieved sufficient joint strength even for JIS No. 1A specimens, whose gauge length is long and whose high joint strength is thus difficult to achieve.

Meanwhile, Comparative Examples Nos. 10 to 23, whose chemical compositions and/or values of Mn + 0.4 × (Cu + Ni) fall outside the scope of the present invention, were inferior in one or more of the above-mentioned characteristics.

**Claims**

1. A steel material for high heat input welding, containing, in mass%,

C: 0.04 to 0.09%,
Si: 0.15 to 0.25%,
Mn: 1.40 to 2.00%,
P: 0.015% or less,
S: 0.0005 to 0.0040%,
Cu: 0.05 to 0.7%,
Ni: 0.4 to 1.3%,
Al: 0.030 to 0.080%,
Ti: 0.005 to 0.023%,
B: 0.0003 to 0.0020%,
Ca: 0.0005 to 0.0030%,

N: 0.0030 to 0.0060%,
O: 0.0040% or less, and further,
Nb: 0.005% or less and
Mo: 0.01% or less,

with the balance being Fe and incidental impurities, wherein Mn, Cu, and Ni are contained so as to satisfy the following expression (1):

$$1.85 \le Mn + 0.4 \times (Cu + Ni) \le 2.10, \quad (1)$$

where Mn, Cu, and Ni represent the contents (mass%) of respective components or are set to zero if not contained.

2. The steel material for high heat input welding according to Claim 1, wherein the following expression (2) is further satisfied:

$$0 < [[Ca - (0.18 + 130 \times Ca) \times O]/1.25]/S \le 0.8, \quad (2)$$

where Ca, O, and S represent the contents (mass%) of respective components.

3. The steel material for high heat input welding according to Claim 1 or 2, further containing, in mass%, one or more selected from

Cr: 0.5% or less,
V: 0.1% or less, and
W: 0.1% or less.

4. The steel material for high heat input welding according to any one of Claims 1 to 3, further containing, in mass%, one or more selected from

Mg: 0.0005 to 0.0050%,
Zr: 0.001 to 0.020%, and
REM: 0.001 to 0.020%.

5. The steel material for high heat input welding according to any one of Claims 1 to 4, wherein an average grain size inside prior austenite grains in a microstructure of a heat-affected zone neighboring a weld bond is 10 $\mu$m or less when high heat input welding at a weld heat input of 80 to 300 kJ/cm is performed.

**INTERNATIONAL SEARCH REPORT**

International application No.

PCT/JP2017/029900

| A. CLASSIFICATION OF SUBJECT MATTER |
|---|
| *C22C38/00*(2006.01)i, *C22C38/16*(2006.01)i, *C22C38/58*(2006.01)i, *C21D8/02* (2006.01)n |

According to International Patent Classification (IPC) or to both national classification and IPC

| B. FIELDS SEARCHED |
|---|
| Minimum documentation searched (classification system followed by classification symbols) |
| C22C38/00-38/60, C21D8/02 |

| Documentation searched other than minimum documentation to the extent that such documents are included in the fields searched |
|---|
| Jitsuyo Shinan Koho          1922–1996   Jitsuyo Shinan Toroku Koho   1996–2017 Kokai Jitsuyo Shinan Koho    1971–2017   Toroku Jitsuyo Shinan Koho   1994–2017 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2011-214053 A  (JFE Steel Corp.), 27 October 2011 (27.10.2011), claims; table 1, steel no. A (Family: none) | 1-5 |
| X | JP 2010-111924 A  (JFE Steel Corp.), 20 May 2010 (20.05.2010), claims; paragraph [0040]; table 1, steel A (Family: none) | 1-5 |
| X | JP 2009-235548 A  (JFE Steel Corp.), 15 October 2009 (15.10.2009), claims; table 1, steel types C, I (Family: none) | 3-5 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 November 2017 (09.11.17) | 21 November 2017 (21.11.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**EP 3 533 891 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4361765 B
- JP 4637516 B
- JP 57051243 A
- JP 3546308 B